# FASCICULE DE BREVET EUROPEEN

(11) **EP 0 832 884 B1**
(45) Date de publication et mention de la délivrance du brevet: **15.12.2004**
(21) Numéro de dépôt: 97112933.3
(22) Date de dépôt: 03.02.1994
(51) Int. Cl.: C07D 303/36, C11D 1/00, A62D 1/00

(54) **Nouveaux tensioctifs fluores alco-oléophobes, leurs obtentions et leurs applications**
Neue, alko-oleophobe, fluorhaltige Netzmittel, Verfahren zu ihrer Herstellung und ihre Verwendung
Novel alco-oleophobic fluorinated surfactants, processes for preparing same and uses thereof

(30) Priorité: 11.02.1993 FR 9301749
(43) Date de publication de la demande: 01.04.1998
(62) Demande divisionnaire de: 94906240.0
(73) Titulaire: SZONYI, Istvan, F-98000 Monte-Carlo (MC); SZONYI, Stéphane, F-06300 Nice (FR); SZONYI, François, MC-98000 Monte Carlo (MC)
(72) Inventeur: SZONYI, Istvan, F-98000 Monte-Carlo (MC); SZONYI, Stéphane, F-06300 Nice (FR); SZONYI, François, MC-98000 Monte Carlo (MC)

(56) Documents cités:
- EP-A- 0 125 826
- WO-A-90/03966
- DE-A- 1 901 710
- DE-A- 2 258 614
- FR-A- 2 438 484
- FR-A- 2 637 506
- US-A- 4 089 804

## Description

La présente invention concerne de nouveaux tensioactifs polyperfluoroalkylés, hydrosolubles dérivés de polyamines polycarboxylées, ne contenant pas d'atome d'azote quaternaire organique, ayant des propriétés non seulement oléophobes, mais fortement alcophobes, utilisables seuls ou avec des émulseurs ayant une base moussante synthétique ou protéinique pour la lutte contre les feux de liquides polaires ou d'hydrocarbures.

On voit depuis quelques décennies que des tensioactifs perfluoroalkylés sont utilisés dans la fabrication des mousses extinctrices. Ces produits fluorés rendent la mousse oléophobe, de telle sorte qu'ils la protègent contre la contamination par les hydrocarbures et donc renforcent son efficacité extinctrice sur feux d'hydrocarbures.

En revanche, toutes ces mousses sont inefficaces contre les feux de liquides polaires; elles se détruisent au simple contact avec les liquides déshydratants tels que les alcools, cétones etc... Ces tensioactifs ne sont pas alcophobes.

Pour lutter contre les feux de liquides polaires, il a été proposé (DP-697646/1940) d'incorporer des sels complexes, tels que par exemple le caprylate de zinc ammoniacal, dans une solution de protéines hydrolysées. Ces mousses ont une certaine résistance contre les feux d'alcool , mais leur résistance contre les feux d'hydrocarbures est considérablement affaiblie à cause de la présence de savons gras. On peut pallier ce défaut par l'adjonction de tensioactifs fluorés oléophobes connus dans le commerce. Néanmoins il subsiste encore un inconvénient majeur: ces émulseurs, lorsqu'ils sont dilués dans l'eau pour leur emploi, s'hydrolysent en quelques minutes et perdent ainsi leurs propriétés moussante et extinctrice.

Afin que la qualité de l'émulseur soit préservée lors du prémélange, il a été proposé de remplacer dans le concentré le sel complexe ammoniacal par des polymères de type polysaccharide; pour renforcer la résistance de la mousse contre les feux d'hydrocarbures, on incorpore alors un tensioactif fluoré oléophobe (U.S. 4060489 ; FR 8003640). Ces liquides émulseurs sont largement répandus dans le commerce, ils sont préparés avec une base moussante synthétique ou protéinique, et sont appelés émulseurs pseudoplastiques à cause de leur comportement rhéologique. En général leur efficacité extinctrice est remarquable sur feux de liquides polaires et d'hydrocarbures ; mais la viscosité du concentré rend difficile sa mise en oeuvre, surtout à basse température.

Le brevet FR 2 637 506 A des mêmes auteurs propose d'améliorer la fluidité des émulseurs pseudoplastiques par diminution de la teneur en polysaccharide dans le concentré et adjonction d'une polyamine quaternaire perfluoroalkylée réactive (brevet FR 2 637 590 A des mêmes auteurs) afin de transformer le polysaccharide en une substance fluorée résistant aux feux de liquides polaires et d'hydrocarbures.

On a déjà proposé d'autres polymères pour résister contre les feux d'alcools; par exemple le sel du copolymère d'éther méthylique de vinyl et d'anhydride maléïque. L'inconvénient de ce type de composé réside dans le fait qu'il faut en utiliser une quantité très importante dans la solution moussante, ce qui rend difficile sa mise en oeuvre, et ceci pour un résultat très faible.

Les brevets US 2378629 et Australien n° 40709-72 proposent un dérivé alkylamidé du copolymère cité précédemment pour remplacer la protéine hydrolysée dans la mousse extinctrice. Ces mousses sont inefficaces sur feux de liquides polaires et médiocres sur feux d'hydrocarbures.

Plusieurs brevets proposent des polyacrylamides monoperfluoroalkylés en position oméga pour stabiliser les mousses protéiniques contre les feux d'hydrocarbures ; mais ces mousses sont inefficaces sur les feux de liquides polaires.

On trouve dans le commerce trois types de ces composés polyacrylamide perfluoroalkylé:

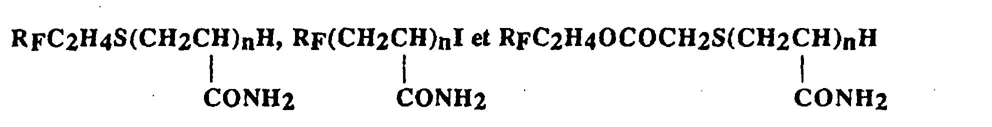

Le brevet JP 04 126 709 décrit un copolymère d'alkényl éther et d'anhydride maléïque perfluoroalkylé dans lequel le groupement fluoré est placé sur la chaîne carbonée, mais n'est pas lié au groupement carboxyle. Ce produit est destiné à l'hydrofugation et n'est par conséquent pas utilisable pour la préparation de mousses aqueuses.

Le brevet JP 03 243 609 fait réagir l'acide polyacrylique et le dihydroperfluorooctylamine pour donner un produit hydrofugeant. L'atome d'azote de l'amide obtenu ne porte pas de groupement hydrophile nécessaire pour favoriser l'alcophobie et la solubilité dans l'eau.

Des tensioactifs fluorés qui sont à la fois alcophobes et oléophobes sont décrits dans les brevets FR 2 636 334 A ; FR 2 637 590 A ; FR 2 637 506 A des mêmes auteurs ; leur qualité est appréciable, mais du fait que ces molécules contiennent nécessairement un atome d'azote quaternaire, leur compatibilité avec les agents tensioactifs anioniques et les dérivés protéiniques reste limitée.

Pour pallier à tous les inconvénients énumérés ci-dessus, nous avons cherché à synthétiser selon l'invention de nouveaux tensioactifs fluorés à la fois alcophobes et oléophobes, compatibles avec des agents tensioactifs anioniques et les dérivés protéiniques. Ainsi la nouveauté des produits selon l'invention, par rapport aux tensioactifs connus, réside dans le fait qu'ils sont alco-oléophobes, compatibles avec des agents tensioactifs anioniques et les dérivés protéiniques, que ces molécules comprennent un groupement polyaminé monomère, oligomère ou polymère, linéaire ou cyclique, qu'elles sont munies d'un ou plusieurs groupements perfluoroalkylés et ne contiennent pas d'atome d'azote quaternaire organique; un ou plusieurs atomes d'azote portent un groupement hydrophile pour favoriser l'alcophobie. Les exemples suivants servent à illustrer l'invention et ne sont nullement limitatifs :

### Exemple 1:

Préparation d'un composé perfluoroalkylé alcophobe possédant un hydrogène mobile, répondant à la formule générale suivante: 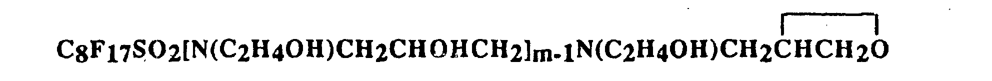 m = 2-4

Dans un réacteur, muni d'un mélangeur et d'un réfrigérant, on introduit 3,66 g (0,06 mole) d'éthanolamine. On ajoute ensuite 4 g de diméthylformamide, puis 10 g (0,02 mole) de fluorure de perfluorooctylsulfonyle, goutte à goutte en mélangeant et en refroidissant . L'addition dure environ 90 minutes en maintenant la température du mélange entre 20 et 30 °C ; on continue ensuite à mélanger 3 heures à 30-40°C.

On verse alors 5 ml d'eau , puis lentement, tout en mélangeant et en refroidissant, 5,5 g (0,06 mole) d'épichlorhydrine du glycérol. Après l'addition, on mélange environ 30 minutes à 60°C, puis on ajoute 5 ml d'eau et une solution de potasse caustique concentrée (5 g KOH dissous dans 5 ml d'eau). On maintient le mélange à 80° C pendant une nuit.

On ajoute 41,84 ml d'eau et 5g de butyldiglycol pour obtenir 85g de solution concentrée.

### Exemples 2:

Préparation d'un composé perfluoroalkylé alcophobe possédant un hydrogène mobile, répondant aux formules générales suivantes: 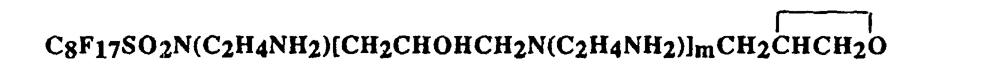 et 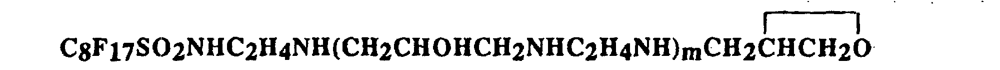 **m = 0-2**

Dans un réacteur, muni d'un mélangeur et d'un réfrigérant , on introduit 3,60 g (0,06 mole) d'éthylène diamine. On ajoute ensuite 4 g de diméthylformamide, puis 10 g (0,02 mole) de fluorure de perfluorooctylsulfonyle, goutte à goutte, tout en mélangeant et en refroidissant . L'addition dure environ 90 minutes en maintenant la température du mélange entre 20 et 30 °C ; on continue ensuite de mélanger encore 3 heures à 30-40°C.

On verse d'abord 5 ml d'eau, puis lentement, tout en mélangeant et en refroidissant, 5,5 g (0.06 mole) d'épichlorhydrine du glycerol. Après l'addition, on mélange environ 30 minutes à 60°C. On ajoute alors 5 ml d'eau et une solution de potasse caustique concentrée ( 5 g KOH dissous dans 5 ml d'eau). On maintient le mélange à 80° C pendant une nuit.

On ajoute 7 g (0,06 mole) de monochloracétate de sodium dissous dans 30 ml d'eau et on mélange à la température de 70-80 °C pendant environ 10 heures. Après avoir refroidi le mélange, on ajoute 2,3 g de potasse caustique dissous dans 12,6 ml d'eau pour régler le pH à 9 environ. Ensuite on verse 5 g de butyldiglycol pour obtenir 100 g de solution concentrée.

### Exemples 3, 4, 5, 6, 7:

Préparation d'un composé perfluoroalkylé alcophobe possédant un hydrogène mobile, répondant à la formule générale suivante: 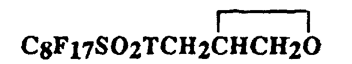
- **T =**: **N(CH**_{**2**}**CO**_{**2**}**K)CHCH**_{**3**}**CH**_{**2**}**(OCH**_{**2**}**CHCH**_{**3**}**)**_{**a**}**NH[CH**_{**2**}**CHOHCH**_{**2**}**N(CH**_{**2**} **CO**_{**2**}**K)CHCH**_{**3**}**CH**_{**2**}**(OCH**_{**2**}**CHCH**_{**3**}**)**_{**a**}**NH]**_{**m-1**}**,**
**N[CHCH**_{**3**}**CH**_{**2**}**(OCH**_{**2**}**CHCH**_{**3**}**)**_{**a**}**NH(CH**_{**2**}**CO**_{**2**}**K)](CH**_{**2**}**CHOHCH**_{**2**}**[CHCH** _{**3**}**CH**_{**2**}**(OCH**_{**2**}**CHCH**_{**3**}**)**_{**a**}**NH(CH**_{**2**}**CO**_{**2**}**K)]}**_{**m-1**}**, m = 1-4 et a = 2,6 (exemple 3),**
**N(CH**_{**2**}**CO**_{**2**}**K)CHCH**_{**3**}**CH**_{**2**}**(OCHCH**_{**3**}**CH**_{**2**}**)**_{**a**}**(OC**_{**2**}**H**_{**4**}**)**_{**b**}**(OCH**_{**2**}**CHCH**_{**3**}**)**_{**c**}**N H[CH**_{**2**}**CHOHCH**_{**2**}**N(CH**_{**2**}**CO**_{**2**}**K)CHCH**_{**3**}**CH**_{**2**}**(OCHCH**_{**3**}**CH**_{**2**}**)**_{**a**}**(OCH**_{**2**}**CH**_{**2**} _{**)b**}**(OCH**_{**2**}**CHCH**_{**3**}**)**_{**c**}**NH]**_{**m-1**}**,**
**N[CHCH**_{**3**}**CH**_{**2**}**(OCHCH**_{**3**}**CH**_{**2**}**)**_{**a**}**(OC**_{**2**}**H**_{**4**}**)**_{**b**}**(OCH**_{**2**}**CHCH**_{**3**}**)**_{**c**}**NH(CH**_{**2**} **CO**_{**2**}**K)]{CH**_{**2**}**CHOHCH**_{**2**}**N[CHCH**_{**3**}**CH**_{**2**}**(OCHCH**_{**3**}**CH**_{**2**}**)**_{**a**}**(OC**_{**2**}**H**_{**4**}**)**_{**b**} **(OCH**_{**2**}**CHCH**_{**3**}**)**_{**c**}**NH(CH**_{**2**}**CO**_{**2**}**K)}**_{**m-1,**} **m = 1-2, (a+c) = 2,6 et b = 40,5 (exemple 4),**
**N(CH**_{**2**}**CO**_{**2**}**K)C**_{**2**}**H**_{**4**}**NH(C**_{**2**}**H**_{**4**}**NH)**_{**q**}**C**_{**2**}**H**_{**4**}**NH[CH**_{**2**}**CHOHCH**_{**2**}**N(CH**_{**2**}**CO**_{**2**} **K)C**_{**2**}**H**_{**4**}**NH(C**_{**2**}**H**_{**4**}**NH)**_{**q**}**C**_{**2**}**H**_{**4**}**NH]**_{**m-1**}**, q = 0 et m = 2-5 (exemple 5), q = 2 et m = 1-3 (exemple 6), q = 3 et m = 1-2 (exemple 7)**

Dans un réacteur muni d'un mélangeur et d'un réfrigérant , on pèse:
- soit 13,80 g (0,06 mole) de poly(oxypropylène)diamine, répondant à la formule suivante:

   **H**_{**2**}**NCHCH**_{**3**}**CH**_{**2**}**(OCH**_{**2**}**CHCH**_{**3**}**)**_{**a**}**NH**_{**2**}

   **(poids moléculaire ≈ 230 ; a = 2 à 3 valeur moyenne = 2,6) (exemple 3)**
- soit 120 g (0,06 mole) de poly(oxyéthylène)diamine, répondant à la formule suivante:

   **H**_{**2**}**NCHCH**_{**3**}**CH**_{**2**}**(OCH**_{**2**}**CHCH**_{**3**}**)**_{**a**}**(OCH**_{**2**}**CH**_{**2**}**)**_{**b**}**(OCH**_{**2**}**CHCH**_{**3**}**)**_{**c**}**NH**_{**2**}

   **(poids moléculaire = 2000 ; b = 40,5 ; a+c = 2,5) ( exemple 4)**
- soit 6,18 g (0,06 mole) de diéthylène triamine (mélange d'isomères) (exemple 5),
- soit 11,45 g (0,06 mole) de tétraéthylène pentamine (mélange d'isomères) (exemple 6),
- soit 13,92 g (0,06 mole) de pentaéthylène hexamine (mélange d'isomères) (exemple 7).

On ajoute ensuite 4 g de diméthylformamide (excepté dans l'exemple 4, où l'on utilise 40 g de DMF) et 7,35 g (0,06 mole) de monochloracétate d'éthyle en refroidissant et en maintenant la température maximale autour de 60-70°C pendant une heure.

On refroidit à 40°C pour ajouter 10 g de triéthylamine et on verse lentement 10 g (0,02 mole) de fluorure de perfluorooctylsulfonyle en maintenant la température à 70°C pendant 2 heures et à 85°C pendant deux heures encore.

On ajoute ensuite 20 ml d'eau. On refroidit à 50°C et on verse lentement, tout en mélangeant et en refroidissant 5,5 g (0,06 mole) d'épichlorhydrine du glycérol. Après l'addition on mélange encore une demi-heure à 70°C.

On verse ensuite 5 ml d'eau et une solution concentrée de potasse caustique (5 g de KOH dissous dans 5 ml d'eau). On mélange à la température de 80°C pendant une nuit.

On refroidit à 30°C, on ajoute 4 g de butyldiglycol et le mélange est complété à 100 g par de l'eau (excepté dans l'exemple 4 où le mélange est complété à 270 g par de l'eau) pour obtenir une solution concentrée.

Le tableau suivant rassemble les valeurs des tensions superficielle et interfaciale, ainsi que celle de l'alcophobie des solutions aqueuses des produits obtenus dans les exemples 3 à 7 :

| Exemple | | 1 | 2 | 3 | 4 | 5 | 6 | 7 |
|---|---|---|---|---|---|---|---|---|
| Produit obtenu / g | | 85 | 100 | 100 | 270 | 100 | 100 | 100 |
| Matière active / % | | 19 | 22 | 29 | 51 | 23 | 28 | 30 |
| Tension superficielle d'une | | | | | | | | |
| solution | à 0,1 % (dyne / cm) | 17,0 | 18,7 | 22,4 | 22,4 | 21,6 | 22,0 | 25,5 |
| | à 0,01% (dyne/cm) | 17,3 | 31,1 | 24,1 | 40,1 | 26,4 | 23,4 | 29,3 |
| Tension interfaciale d'une solution à 0,1 % (dynes/cm) | | 5,3 | 3,8 | 4,3 | 7,2 | 4,2 | 3,8 | 5,1 |
| Valeur de l'alcophobie d'une solution à 5% ( secondes) | | 45 | 50 | 30 | 5 | 25 | 30 | 28 |

### Exemple 8:

Préparation d'un intermédiaire perfluoroalkylé alcophobe possédant un hydrogène mobile répondant à la formule suivante:

**C**_{**8**}**F**_{**17**}**SO**_{**2**}**NCH**_{**2**}**CO**_{**2**}**KCH**_{**2**}**CH**_{**2**}**NHCH**_{**2**}**CO**_{**2**}**K**

Dans un réacteur muni d'un mélangeur et d'un réfrigérant on introduit 1,2 g (0,02 mole) d'éthylène diamine et 6 g de diméthylformamide.

Ensuite on ajoute goutte à goutte et en refroidissant 10 g (0,02 mole) de fluorure de perfluorooctylsulfonyle. On maintient une température maximale de 30°C pendant l'addition et on mélange encore deux heures à 30-40°C. On ajoute 4,7 g (0,04 mole) de monochloroacétate de sodium dissous dans 10 ml d'eau, en maintenant la température du mélange vers 40-50 °C pendant une heure. On verse ensuite 20 ml d'une solution de potasse caustique contenant 3,4 g de KOH dans 5 ml d'eau et on mélange à la température de 60-70°C pendant 4 heures. On refroidit, on ajoute 5 g de butyldiglycol et on complète le mélange à 100 g par addition d'eau pour obtenir une solution concentrée ayant un pH d'environ 8-9.

Dans le tableau suivant sont représentées les valeurs des tensions superficielle et interfaciale, ainsi que celle de l'alcophobie d'une solution aqueuse du produit obtenu dans l'exemple 8.

| Exemple | | 8 |
|---|---|---|
| produit obtenu / g | | 100 |
| matière active / % | | 14 |
| Tension superficielle d'une solution à | 0,1% (dynes/cm) | 18 |
| | 0,01% (dynes/cm) | 25 |
| Tension interfaciale d'une solution à 0,1% (dynes/cm) | | 6 |
| Valeur de l'alcophobie d'une solution à 5% ( secondes) | | 20 |

### Exemples 9, 10:

Préparation de composés perfluoroalkylés alcophobes possédant un hydrogène mobile, répondant à la formule générale suivante:

**C**_{**8**}**F**_{**17**}**SO**_{**2**}**N(CH**_{**2**}**COOK)C**_{**2**}**H**_{**4**}**[N(CH**_{**2**}**COOK)C**_{**2**}**H**_{**4**}**]**_{**q**}**NHSO**_{**2**}**C**_{**8**}**F**_{**17**}

**q = 1 dans le cas de l'exemple 9**
**q = 3 dans le cas de l'exemple 10**

Dans un réacteur muni d'un mélangeur et d'un réfrigérant, on introduit
- soit 1,03 g (0,01 mole) de diéthylènetriamine (mélange d'isomères) (exemple 9),
- soit 1,89 g (0,01 mole) de tetraéthylènepentamine (mélange d'isomères) (exemple 10)
et 4 g de diméthylformamide.

Ensuite on verse en refroidissant et en mélangeant énergiquement 10 g (0,02 mole) de fluorure de perfluorooctylsulfonyle. On mélange à 50°C pendant une demi-heure et encore deux heures à 80°C. On ajoute ensuite 5 ml d'eau en refroidissant à 50°C et on verse une solution contenant 2,33 g (0,02 mole) dans le cas de l'exemple 9 ou 4,66 g (0,04 mole) dans le cas de l'exemple 10 de monochloracétate de sodium dissous respectivement dans 10 ml ou 20 ml d'eau. La température du mélange est maintenue à 70-80°C pendant 5 heures. Ensuite, on refroidit le mélange à 30°C et on ajoute 4 g de butyldiglycol puis 5,6 g (exemple 9) ou 7,9 g (exemple 10) de potasse caustique à 50% de concentration, et de l'eau en quantité nécessaire pour obtenir 100 g de solution concentrée avec un pH d'environ 8.

Le tableau suivant rassemble les valeurs des tensions superficielle et interfaciale, ainsi que celle de l'alcophobie des solutions aqueuses des produits obtenus dans les exemples 9 et 10:

| Exemple | | 9 | 10 |
|---|---|---|---|
| Produit obtenu / g | | 100 | 100 |
| Matière active / % | | 12,5 | 15 |
| Tension superficielle d'une solution à | 0,1% (dynes/cm) | 17,5 | 16,5 |
| | 0,01% (dynes/cm) | 19 | 18,5 |
| Tension interfaciale d'une solution à 0,1% (dynes/cm) | | 4,5 | 4,8 |
| Valeur de l'alcophobie d'une solution à 5% ( secondes ) | | 40 | 50 |

### Exemples 11, 12:

Préparation des intermédiaires perfluoroalkylés alcophobes possédant un hydrogène mobile, répondant à la formule générale suivante:

**R**_{**F**}**C**_{**2**}**H**_{**4**}**N(CH**_{**2**}**COOK)C**_{**2**}**H**_{**4**}**[N(CH**_{**2**}**COOK)C**_{**2**}**H**_{**4**}**]**_{**3**}**-NH(CH**_{**2**}**COOK)**

**R**_{**F**} **= -C**_{**6**}**F**_{**13**} **(exemple 11) ou -C**_{**8**}**F**_{**17**} **(exemple 12)**

Dans un ballon muni d'un réfrigérant et d'un agitateur on dispose 11,45 g (0,06 mole) de tétraéthylénepentamine (mélange d'isomères) et on ajoute
- soit 9,2 g (0,02 mole) de iodure de perfluorohexyléthyle (exemple 11),
- soit 11,2 g (0,02 mole) de iodure de perfluorooctyléthyle (exemple 12);
on chauffe alors à 30°C puis en mélangeant on ajoute 5 g de diméthylformamide et on maintient le mélange à 90°C pendant 5 heures.

On refroidit le mélange à 50°C puis on ajoute 39,6 g (0,34 mole) de monochloroacétate de sodium dissous dans 70 ml d'eau et on mélange pendant 5 heures à 70 °C. Ensuite on verse une solution de potasse caustique contenant 17 g de KOH et 20ml d'eau. On maintient la température à 70°C encore deux heures, on ajoute alors 6 g de butyldiglycol et on complète avec de l'eau pour obtenir 200 g de produit concentré.

Le tableau suivant rassemble les valeurs des tension superficielle et interfaciale, ainsi que celle de l'alcophobie des solutions aqueuses des produits obtenus dans les exemples 11 et 12:

| Exemple | | 11 | 12 |
|---|---|---|---|
| Produit obtenu / g | | 200 | 200 |
| Matière active / % | | 10 | 11 |
| Tension superficielle d'une solution à | 0,1% (dynes/cm) | 23 | 22 |
| | 0,01% (dynes/cm) | 34 | 32 |
| Tension interfaciale d'une solution à 0,1% (dynes/cm) | | 5 | 5,5 |
| Valeur de l'alcophobie d'une solution à 5% ( secondes ) | | 15 | 20 |

### Exemple 13 :

Préparation d'un intermédiaire perfluoroalkylé alcophobe possédant un hydrogène mobile répondant à la formule suivante:

**C**_{**7**}**F**_{**15**}**CONHC**_{**2**}**H**_{**4**}**[N(CH**_{**2**}**CO**_{**2**} **K)C**_{**2**}**H**_{**4**}**]**_{**3**}**N(CH**_{**2**}**CO**_{**2**} **K)COC**_{**7**}**F**_{**15**}

Dans un réacteur on pèse 1,89 g (0,01 mole) de tétraéthylènepentamine (mélange d'isomères) et 5g de diméthylformamide ; on ajoute ensuite en plusieurs portions 8,65 g (0,02 mole) de chlorure de perfluorooctanoyle. On maintient le mélange à la température de 50°C pendant une demi-heure et 80°C pendant 3 heures. On refroidit le mélange à 50°C et on ajoute 4,7 g (0,04 mole) de monochloracétate de sodium dissous dans 10 ml d'eau . Ensuite on mélange à la température de 70°C pendant 7 heures.On verse 30 ml d'eau et on refroidit le mélange à 30°C. Puis on ajoute 2,3 g de potasse caustique dissous dans 5 g d'eau et 4 g de butyldiglycol. Le mélange est complété à 80 g par de l'eau.

Le tableau suivant rassemble les valeurs des tensions superficielle et interfaciale, ainsi que celle de l'alcophobie d'une solution aqueuse du produit obtenu dans l'exemple 13.

| Exemple | | 13 |
|---|---|---|
| produit obtenu / g | | 80 |
| matière active / % | | 17 |
| Tension superficielle d'une solution à | 0,1% (dynes/cm) | 18 |
| | 0,01% (dynes/cm) | 25 |
| Tension interfaciale d'une solution à 0,1% (dynes/cm) | | 5 |
| Valeur de l'alcopobie d'une solution à 5% ( secondes) | | 45 |

### Exemple 14 :

Dans cet exemple est défini le mode opératoire utilisé pour mesurer la valeur de l'alcophobie c'est à dire la résistance contre la force destructrice des liquides polaires, en l'occurence l'éthanol.
(a) On prépare des solutions comprenant 95 parties en poids d'eau et 5 parties en poids de produit à tester.
(b) Dans un récipient cylindrique en acier inoxydable de diamètre 70 mm, de hauteur 32,5 mm et de capacité 125 ml, on verse 100 ml d'éthanol à 95%, à la température de 20-22°C du liquide et de l'air ambiant. On couvre 90% de la surface de l'éthanol avec 25 ml de mousse produite à l'aide de la solution (a) par un moyen bien déterminé. A compter du moment où la mousse est versée à la surface, on note le temps nécessaire pour détruire la moitié de la mousse versée initialement. Le temps compté en secondes représente la "valeur relative de l'alcophobie".

Les tensioactifs fluorés connus jusqu'ici ne résistent qu' 1 à 2 secondes au contact des liquides polaires; leur disparition à la surface de l'alcool est pratiquement instantanée.

Les produits résistant plus de 10 secondes sont utilisables dans les compositions d'émulseur polyvalent, i.e. ils sont capables de renforcer la résistance de la mousse extinctrice contre les feux destructeurs des liquides polaires.

Le tableau suivant rassemble les résultats des essais d'alcophobie réalisés avec les produits obtenus dans les exemples 1 à 13 et comparés avec la valeur relative d'alcophobie d'un tensioactif fluoré commercial :

| Solution 5% préparée avec les produits des exemples : | Matière active % | Valeurs relatives de l'alcophobie (secondes) | Solution 5% préparée avec les produits des exemples : | Matière active % | Valeurs relatives de l'alcophobie (secondes) |
|---|---|---|---|---|---|
| un tensioactif fluoré commercial | 1,35 | < 2 | 7 | 0,80 | 28 |
| 1 | 0,95 | 45 | 8 | 0,70 | 20 |
| 2 | 1,10 | 50 | 9 | 0,62 | 40 |
| 3 | 1,45 | 30 | 10 | 0,75 | 50 |
| 4 | 2,55 | 5 | 11 | 0,50 | 15 |
| 5 | 0,70 | 25 | 12 | 0,55 | 20 |
| 6 | 0,75 | 30 | 13 | 0,85 | 45 |

### Exemple 15:

Dans cet exemple est défini le mode opératoire général utilisé pour mesurer la valeur extinctrice des produits selon l'invention sur feux d'hydrocarbures (heptane) et de liquides polaires (acétone).
On utilise un émulseur concentré de composition suivante:
20% en poids d'un tensioactif fluoré selon les exemples1 à 13
8% en poids de laurylamidopropyl bétaïne (matière active: 30%)
8% en poids de butyldiglycol
4% en poids d'octylsulfate de sodium (matière active: 40%)
10% en poids d'urée
50% en poids d'eau.
Dans cet émulseur on fait varier le tensioactif fluoré et on effectue des essais d'extinction de feu d'heptane et d'acétone avec une solution à 6% en poids de cet émulseur selon les normes AFNOR-S-60-220 et AFNOR-S-60-225.
Le tableau suivant rassemble les données obtenues:

| | Extinction sur feu d'heptane Norme AFNOR-S60-220 | | Extinction sur feu d'acétone Norme AFNOR-S60-225 | |
|---|---|---|---|---|
| Tensioactif fluoré | Temps d'extinction | Temps de réallumage | Temps d'extinction | Temps de réallumage |
| Un tensioactif commercial | 0′50˝ | 6′00˝ | Pas d'extinction | Pas d'extinction |
| 1 | 1′30˝ | 10′ | 0′50˝ | 7′ |
| 2 | 1′50˝ | 11′ | 0′30˝ | 15′ |
| 3 | 2′10˝ | 9′ | 1′00˝ | 12′ |
| 4 | 2′30˝ | 10′ | 4′00˝ | 8′ |
| 5 | 2′40˝ | 8′ | 1′50˝ | 9′ |
| 6 | 3′00˝ | 15′ | 0′50˝ | 9′ |
| 7 | 3′00˝ | 16′ | 1′00˝ | 10′ |
| 8 | 1′10˝ | 11′ | 2′10˝ | 12′ |
| 9 | 1′00˝ | 10′ | 0′28˝ | 11′ |
| 10 | 0′50˝ | 11′ | 0′30˝ | 12′ |
| 11 | 2′50˝ | 12′ | 2′30˝ | 10′ |
| 12 | 2′40˝ | 11′ | 2′20˝ | 11′ |
| 13 | 1′50˝ | 12′ | 0′50˝ | 13′ |

## Revendications

1. Nouveaux tensioactifs polyperfluorés hydrosolubles, dérivés de polyamines polycarboxylées, **caractérisés par le fait qu'**ils sont dotés non seulement de propriété oléophobe, mais principalement de propriété alcophobe prononcée, qu'ils sont compatibles avec des agents tensioactifs anioniques et des dérivés protéiniques, que leur structure moléculaire est exempte d'atome d'azote quaternaire organique et munie d'un ou plusieurs groupements perfluoroalkylés ayant un nombre d'atome de carbone allant de 4 à 20, et qu'ils répondent à la formule générale suivante :
R_{F}(CH₂)ₓ-B-T-E
avec
E = 2,3 époxypropyl ou H;
B = -SO₂-, -CO- lorsque x = 0 à 4 ou une liaison simple lorsque x = 1 à 4;
T = -[N(A-OH)CH₂CHOHCH₂)ₘ₋₁-N(A-OH)- ou
- [N(A-NHR)CH₂CHOHCH₂)ₘ₋₁-N(A-NHR)- ou
- (NR-A-NRCH₂CHOHCH₂)ₘ₋₁-NR-A-NR-,
quand E = 2,3 epoxypropyl
ou
- N CH₂COOM CH₂CH₂(N CH₂COOM CH₂CH₂)_{q}N CH₂COOM - ou
- N CH₂COOM CH₂CH₂(N CH₂COOM CH₂CH₂)_{q}N CH₂COOM-[-B(CH₂)ₓ-R_{F}]-
quand E = H;
R_{F} = perfluoroalkyle C₄₋₂₀:
A = alkylène C₂₋₆ ou
- C(U)HCH₂(OCH₂CHCH₃)ₐ-(OCH₂CH₂)_{b}-[OCH₂C(U)H]_{c}- lorsque A est compris
entre deux atomes d'azote ou
- (CH₂CH₂NR)_{q}CH₂CH₂- lorsque A est compris entre deux atomes d'azote;
U = H ou CH₃;
R = CH₂COOM, H;
M = -H ou un metal alcalin ou NH₄⁺;
a = un nombre entier de 0 à 60;
b = un nombre entier de 0 à 60, différent ou egal à a et c;
c = un nombre entier de 0 à 60, différent ou egal à a et b;
m = un nombre entier de 1 à 20;
q = un nombre entier;
x = un nombre entier de 0 à 4, différent ou egal à q.

2. Procédé pour l'obtention de produits perfluoroalkylés selon la revendication (1) et correspondant à de formule générale **RF-(CH**_{**2**}**)**_{**x**}**-B-T-E** et dont les paramètres sont les suivants:
**E = un atome d'hydrogène**
**T = -N(CH**_{**2**}**COOM)C**_{**2**}**H**_{**4**}**[N(CH**_{**2**}**COOM)C**_{**2**}**H**_{**4**}**]**_{**q**}**-N(CH**_{**2**}**COOM)- ou - N[-B(CH**_{**2**}**)**_{**x**}**-R**_{**F**}**]C**_{**2**}**H**_{**4**}**[N(CH**_{**2**}**COOM)C**_{**2**}**H**_{**4**}**]**_{**q**}**-N(CH**_{**2**}**COOM)-**
**R**_{**F**}**, B, m, q, x** et **M** ayant la même signification que précédemment,
on fait réagir, dans un intervalle de température compris entre 20 et 90°C, 1 à 2 moles d'un composé perfluoroalkylé **(R**_{**F**}**-(CH**_{**2**}**)**_{**x**}**-B-S** où **S** = **F** quand **B** est différent d'une liaison simple, **S** = **Cl** ou **Br** quand **x** > 0, **S** = **I** quand **B** est une liaison simple et où **R**_{**F**}**, B,** et **x** ont la même signification que précédemment) avec 1 à 4 moles d'une polyamine **H**_{**2**}**N(C**_{**2**}**H**_{**4**}**NH)**_{**q**}**H** où **q** a la même signification que précédemment, le composé obtenu étant mis à réagir avec 1 à 4q fois moles d'un monohalogénoacétate de métal alcalin dans un intervalle de température compris entre 45 et 90°C.

3. Procédé pour l'obtention de produits perfluoroalkylés selon la revendication (1) et correspondant à de formule générale **R**_{**F**}**-(CH**_{**2**}**)**_{**x**}**-B-T-E** et dont les paramètres sont les suivants:
**E = 2,3 époxypropyl**
**T = -[N(A-OH)CH**_{**2**}**CHOHCH**_{**2**}**)**_{**m-1**}**-N(A-OH)- ou**
**-[N(A-NHR**_{**2**}**)CH**_{**2**}**CHOHCH**_{**2**}**)**_{**m-1**}**-N(A-NHR**_{**2**}**)-ou**
**- (NR**_{**2**}**-A-NR**_{**2**}**-CH**_{**2**}**CHOHCH**_{**2**}**)**_{**m-1**}**-NR**_{**2**}**-A-NR**_{**2**}
**R**_{**F**}**, A, B, m, x** et **R** ayant la même signification que précédemment,
on fait réagir, dans un intervalle de température compris entre 20 et 90°C, 1 mole d'un composé perfluoroalkylé **(R**_{**F**}**-(CH**_{**2**}**)**_{**x**}**-B-S** où **S** = **F** quand **B** est différent d'une liaison simple. **S = Cl** ou **Br** quand **x** > 0, **S** = **I** quand **B** est une liaison simple et où **RF, B,**et **x** ont la même signification que précédemment) avec 2 à 10 moles d'une polyamine **H**_{**2**}**N(C**_{**2**}**H**_{**4**}**NH)**_{**q**}**H**, d'une alcanolamine **H**_{**2**}**N-A-OH** ou d'une diamine
**H**_{**2**}**N-C(U)HCH**_{**2**}**(OCH**_{**2**}**CHCH**_{**3**}**)**_{**a**}**-(OCH**_{**2**}**CH**_{**2**}**)**_{**b**}**-[OCH**_{**2**}**C(U)H]**_{**C**}**-NH**_{**2**} où **q**, **A**, U, a, b et c ont la même signification que précédemment, le composé obtenu étant mis à réagir avec 2 à 10 moles d'épichlorhydrine du glycérol dans un intervalle de température compris entre 20 et 90°C, puis avec 4 à 12 moles de KOH dans un intervalle de température compris entre 30 et 90°C, puis 0 à 10q fois moles d'un monohalogénoacétate de métal alcalin dans un intervalle de température compris entre 60 et 90°C, l'ordre d'addition de l'épichlorhydrine du glycérol et du monohalogénoacétate de métal alcalin pouvant être inversé.

4. Application de nouveaux tensioactifs perfluoroalkylés, selon la revendication (1), **caractérisés par le fait qu'**on les utilise comme agent alcophobe et oléophobe dans la technique et principalement dans les compositions de mousses extinctrices capables d'éteindre non seulement les feux d'hydrocarbures mais aussi les feux de liquides polaires (alcools, éthers, esters etc...).

5. Composé perfluoroalkylé alcophobe répondant à la formule suivante :
C₈F₁₇SO₂N(CH₂COOK)C₂H₄N(CH₂COOK)C₂H₄NHSO₂C₈F₁₇
obtenu en introduisamt dans un réacteur muni d'un mélangeur et d'un réfrigérant, 1,03 g (0,01 mole) de diéthylènetriamine (mélange d'isomères) et 4 g de diméthylformamide, puis en versant en refroidissant et en mélangeant énergiquement 10 g (0,02 mole) de fluorure de perfluorooctylsulfonyle. On mélange à 50°C pendant une demi-heure et encore deux heures à 80°C. On ajoute ensuite 5 ml d'eau en refroidissant à 50°C et on verse une solution contenant 2,33 g (0,02 mole) de monochloracétate de sodium dissous respectivement dans 10 ml d'eau. La température du mélange est maintenue à 70-80°C pendant 5 heures. Ensuite, on refroidit le mélange à 30°C et on ajoute 4 g de butyldiglycol puis 5,6 g de potasse caustique à 50% de concentration, et de l'eau en quantité nécessaire pour obtenir 100 g de solution concentrée avec un pH d'environ 8.

6. Composé perfluoroalkylé alcophobe répondant à la formule suivante :
C₈F₁₇SO₂N(CH₂COOK)C₂H₄[N(CH₂COOK)C₂H₄]_{q}NHSO₂C₈F₁₇
avec q = 3
obtenu en introduisant dans un réacteur muni d'un mélangeur et d'un réfrigérant, 1,89 g (0,01 mole) de tetraéthylènepentamine (mélange d'isomères) et 4 g de diméthylformamide, puis en versant en refroidissant et en mélangeant énergiquement 10 g (0,02 mole) de fluorure de perfluorooctylsulfonyle.On mélange à 50°C pendant une demi-heure et encore deux heures à 80°C. On ajoute ensuite 5 ml d'eau en refroidissant à 50°C et on verse une solution contenant 4,66 g (0,04 mole) de monochloracétate de sodium dissous dans 20 ml d'eau. La température du mélange est maintenue à 70-80°C pendant 5 heures. Ensuite, on refroidit le mélange à 30°C et on ajoute 4 g de butyldiglycol puis 7,9 g de potasse caustique à 50% de concentration, et de l'eau en quantité nécessaire pour obtenir 100 g de solution concentrée avec un pH d'environ 8.

7. Composé perfluoroalkylé alcophobes répondant à la formule suivante :
C₇F₁₅CONHC₂H₄[N(CH₂CO₂ K)C₂H₄]₃N(CH₂CO₂ K)COC₇F₁₅,
obtenu en introduisant dans un réacteur muni d'un mélangeur et d'un réfrigérant, 1,89 g (0,01 mole) de tétraéthylènepentamine (mélange d'isomères) et 5g de diméthylformamide et en ajoutant en plusieurs portions 8,65 g (0,02 mole) de chlorure de perfluorooctanoyle. On maintient le mélange à la température de 50°C pendant une demi-heure et 80°C pendant 3 heures. On refroidit le mélange à 50°C et on ajoute 4,7 g (0,04 mole) de monochloracétate de sodium dissous dans 10 ml d'eau. Ensuite on mélange à la température de 70°C pendant 7 heures.On verse 30 ml d'eau et on refroidit le mélange à 30°C. Puis on ajoute 2,3 g de potasse caustique dissous dans 5 g d'eau et 4 g de butyldiglycol. Le mélange est complété à 80 g par de l'eau.

## Patentansprüche

1. Neue wasserlösliche Derivate von polycarboxyliertem Polyamin, die spannungsaktiv und polyperfluoriert sind, und die sich dadurch kennzeichnen, dass sie nicht nur ölabweisende sondern vor allem auch alkoholabweisende Eigenschaften besitzen, dass sie mit anionischen spannungsaktiven Stoffen kompatibel sind sowie mit Proteinderivaten, dass ihre Struktur frei von quaternären organishen Stickstoffatomen ist, dass sie eine oder mehrere Perfluoroalkylgruppen mit 4 bis 20 Kohlenstoffatomen besitzen, dass sie der folgenden Formel entsprechen :
R_{F}(CH₂)ₓ-B-T-E
mit
E = 2,3 Epoxypropyl oder H;
B = -SO₂-, -CO- wenn x = 0 bis 4 oder eine einfache Verbindung wenn x = 1 bis 4;
T = -[N(A-OH)CH₂CHOHCH₂)ₘ₋₁-N(A-OH)- oder
- [N(A-NHR)CH₂CHOHCH₂)ₘ₋₁-N(A-NHR)- oder
- (NR-A-NRCH₂CHOHCH₂)ₘ₋₁-NR-A-NR-,
wenn E = 2,3 Epoxypropyl
oder
- N CH₂COOM CH₂CH₂(N CH₂COOM CH₂CH₂)_{q}N CH₂COOM - oder
- N CH₂COOM CH₂CH₂(N CH₂COOM CH₂CH₂)_{q}N CH₂COOM -[-B(CH₂)ₓ- R_{F}]-
wenn E = H;
R_{F} = Perfluoroalkyl C₄₋₂₀;
A = Alkylen C₂₋₆ oder
- C(U)HCH₂(OCH₂CHCH₃)ₐ-(OCH₂CH₂)_{b}-[OCH₂C(U)H]_{c}- wenn A sich zwischen 2 Stickstoffatomen befindet oder
- (CH₂CH₂NR)_{q}CH₂CH₂- wenn A sich zwischen 2 Stickstoffatomen befindet
U = H oder CH₃;
R = CH₂COOM, H;
M = -H oder ein Alkalimetall oder NH₄⁺;
a = eine ganze Zahl von 0 bis 60;
b = eine ganze Zahl von 0 bis 60, verschieden von oder mit a und c gleich
c = eine ganze Zahl von 0 bis 60, verschieden von oder gleich mit a und b;
m = eine ganze Zahl von 1 bis 20;
q = eine ganze Zahl;
x = eine ganze Zahl von 0 bis 4 verschieden von oder mit q gleich.

2. Verfahren für die Gewinnung von Perfluoroalkylprodukten gemäss Anspruch (1), das der Formel **R**_{**F**}**-(CH**_{**2**}**)**_{**x**}**-B-T-E** entspricht, und deren Parameter die folgenden sind :
**E = Wasserstoffatom**
**T = -N(CH**_{**2**}**COOM)C**_{**2**}**H**_{**4**}**[N(CH**_{**2**}**COOM)C**_{**2**}**H**_{**4**}**]**_{**q**}**-N(CH**_{**2**}**COOM)-** oder **- N[-B(CH**_{**2**}**)**_{**x**}**-R**_{**F**}**]C**_{**2**}**H**_{**4**}**[N(CH**_{**2**}**COOM)C**_{**2**}**H**_{**4**}**]**_{**q**}**-N(CH**_{**2**}**COOM)-**
**R**_{**F**}**, B, m, q, x** und **M** mit derselben Signifikanz wie vorher,
Bei Temperaturen zwischen 20 und 90°C, lässt man 1 bis 2 Mol von einer Perfluoroalkylverbindung **(R**_{**F**}**-(CH**_{**2**}**)**_{**x**}**-B-S** wo **S** = **F** wenn **B** von einer einfachen Verbindung verschieden ist, **S** = **Cl** oder **Br** wenn **x** > 0, **S** = **I** wenn **B** eine einfache verbindung ist und **R**_{**F**}**, B** und **x** dieselbe Signifikanz wie vorher haben) mit 1 bis 4 Mol von einem Polyamin **H**_{**2**}**N(C**_{**2**}**H**_{**4**}**NH)**_{**q**}**H** reagieren, wo **q** dieselbe Signifikanz wie vorher hat. Die dadurch erreichte Verbindung lässt man mit 1 bis 4q mal Mol von einem Alkalimetallmonohalogenazetat bei Temperaturen zwischen 45 und 90°C reagieren.

3. Gemäss Anspruch 1 Verfahren für die Gewinnung von Perfluoroalkylprodukten, die der Formel **R**_{**F**}**-(CH**_{**2**}**)**_{**x**}**-B-T-E** entsprechen , und deren Parameter die folgenden sind:
**E = 2,3 Epoxypropyl**
**T = -[N(A-OH)CH**_{**2**}**CHOHCH**_{**2**}**)**_{**m-1**}**-N(A-OH)- oder**
**- [N(A-NHR**_{**2**}**)CH**_{**2**}**CHOHCH**_{**2**}**)**_{**m-1**}**-N(A-NHR**_{**2**}**)- oder**
**- (NR**_{**2**}**-A-NR**_{**2**}**-CH**_{**2**}**CHOHCH**_{**2**}**)**_{**m-1**}**-NR**_{**2**}**-A-NR**_{**2**}**-**
**R**_{**F**}**, A, B, m, x** und **R** haben dieselbe Signifikanz wie vorher,
Bei Temperaturen zwischen 20 und 90°C, lässt man 1 Mol von einer Perfluoroalkylverbindung **(R**_{**F**}**-(CH**_{**2**}**)**_{**x**}**-B-S** wo **S** = **F** wenn **B** von einer einfachen Verbindung verschieden ist, **S** = **Cl** oder **Br** wenn **x** > 0, **S** = **I** wenn **B** eine einfache Verbindung ist und **R**_{**F**}, **B**, und **x** dieselbe Signifikanz wie vorher haben), mit 2 bis 10 Mol Polyamin **H**_{**2**}**N(C**_{**2**}**H**_{**4**}**NH)**_{**q**}**H,** eines Alcanolamins **H**_{**2**}**N-A-OH** oder eines Diamins reagieren : **H**_{**2**}**N-C(U)HCH**_{**2**}**(OCH**_{**2**}**CHCH**_{**3**}**)**_{**a**}**-(OCH**_{**2**}**CH**_{**2**}**)**_{**b**}**-[OCH**_{**2**}**C(U)H]**_{**c**}**-NH**_{**2**} wo **q, A, U, a, b** und **c** dieselbe Signifikanz wie vorher haben. Die dadurch gewonnene Verbindung lässt man mit 2 bis 10 Mol Glyzerinepichlorhydrin bei Temperaturen zwischen 20 bis 90°C reagieren. Danach mit 4 bis 12 Mol KOH bei Temperaturen zwischen 30 und 90°C. Danach 0-10 q mal Mol eines Monohalogenazetats eines Alkalimetalls bei Temperaturen zwischen 60 und 90°C. Die Beimischung der beiden letzen Produkte kann umgekehrt werden.

4. Gemäss Anspruch 1 sind die neuen Perfluoroalkyle **dadurch gekennzeichnet, dass** sie als alkohol- und ölabweisende Produkte in der Löschschaumtechnik eingesetzt werden können besonders beim Löschen nicht nur von Kohlenwasserstoffbräinden sondern auch bei Feuern, die von polaren Flüssigkeiten (Alkoholen, Athern oder Esthern, usw.) verursacht wurden.

5. Alkoholabweisende Perfluoroalkylverbindungen entsprechend der Formel:
C₈F₁₇SO₂N(CH₂COOK)C₂H₄N(CH₂COOK)C₂H₄NHSO₂C₈F₁₇
Wurden dadurch gewonnen, dass man in einen Reaktor, der mit einer Mischvorrichtung und Kühlmittel versehen ist, 1,03 g (0,01 Mol) Diethylenetriamine (Isomergemisch) und 4 g Dimethylformamid eingibt und danach 10 g (0,02 Mol) Perfluorooctylsulfonyl-fluorid immer bei energischem Umrühren bei 50°C während einer halben Stunde und danach 2 Stunden bei 80°C. Danach werden 5 ml Wasser hinzugefügt, um die Temperatur auf 50°C zu bringen. Danach wird eine Lösung mit 2,33 g (0,02 Mol) Natriummonochlorazetat in 10 ml Wasser gelöst beigefügt. Die Temperatur wird während 5 Stunden bei 70-80°C aufrechterhalten. Zuletzt erfolgt die Abkühlung bis auf 30°C. Es werden jetzt 4 g Butyldiglycol und danach 5,6 g Atzkali (Konzentration 50% )sowie das für eine Menge von 100 g konzentriertem Gemisch notwendige Wasser beigegeber, um ein pH von etwa 8 zu erreichen.

6. Perfluoroalkylverbindung die der folgenden Formel entspricht :
C₈F₁₇SO₂N(CH₂COOK)C₂H₄[N(CH₂COOK)C₂H₄]_{q}NHSO₂C₈F₁₇
mit q = 3.

## Claims

1. New water-soluble polyperfluoride surface active agents, derived from polycarboxyl polyamines, **characterised by** not only oleophobic properties, but mainly strong alcophobic properties; they are compatible with anionic surface active agents and protein derivatives; their molecular structure is free of quaternary nitrogen atoms and includes one or several perfluoroalkyl groups with a number of carbon atoms ranging from 4 to 20, and they correspond to the following general formula:
R_{F}(CH₂)ₓ-B-T-E
with
E = 2,3 epoxypropyl or H;
B = -SO₂-, -CO- when x = 0 to 4 or a simple bond where x = 1 to 4;
T = -[N(A-OH) CH₂CHOHCH₂)ₘ₋₁-N(A-OH)- or
-[N (A-NHR)CH₂CHOHCH₂)ₘ₋₁-N(A-NHR)- or
- (NR-A-NRCH₂CHOHCH₂)ₘ₋₁-NR-A-NR-,
when E = 2,3 epoxypropyl
or
- N CH₂COOM CH₂CH₂ (N CH₂COOM CH₂CH₂)_{q} N CH₂COOM - or
- N CH₂COOM CH₂CH₂ (N CH₂COOM CH₂CH₂)_{q} N CH₂COOM -[-B(CH₂)ₓ-R_{F}]-
when E = H;
R_{F} = perfluoroalkyl C₄₋₂₀;
A = alkylene C₂₋₆ or
- C(U)HCH₂(OCH₂CHCH₃)ₐ-(OCH₂CH₂)_{b}-[OCH₂C(U)H]_{c}- when A is between two nitrogen atoms or
- (CH₂CH₂NR)_{q}CH₂CH₂- when A is between two nitrogen atoms;
U = H or CH₃;
R = CH₂COOM, H;
M = -H or an alkaline metal or NH₄⁺;
a = an integer from 0 to 60;
b = an integer from 0 to 60, different from or equal to a and c;
c = an integer from 0 to 60, different from or equal to a and b;
m = an integer from 1 to 20;
q = an integer;
x = an integer from 0 to 4, different from or equal to q.

2. Process to obtain perfluoroalkyl products in accordance with the claim (1) and which corresponds to the general formula **R**_{**F**}**-(CH**_{**2**}**)**_{**x**}**-B-T-E** where the parameters are the following:
**E =** **a hydrogen atom**
**T =** **-N(CH**_{**2**}**COOM)C**_{**2**}**H**_{**4**}**[N(CH**_{**2**}**COOM)C**_{**2**}**H**_{**4**}**]**_{**q**}**-N(CH**_{**2**}**COOM)- or**
**-N[-B(CH**_{**2**}**)**_{**x**}**-R**_{**F**}**]C**_{**2**}**H**_{**4**}**[N(CH**_{**2**}**COOM)C**_{**2**}**H**_{**4**}**]**_{**q**}**-N(CH**_{**2**}**COOM)-**
**R**_{**F**}**, B, m, q, x** and **M** having the same significance as previously,
Over a temperature range of between 20 and 90°C, 1 to 2 moles of a perfluoroalkyl compound are reacted **(R**_{**F**}**-(CH**_{**2**}**)**_{**x**}**-B-S** where **S** = **F** when **B** is not equal to a simple bond, **S** = **Cl** or **Br** when **x** > 0, **S** = **I** when **B** is a simple bond and where **R**_{**F**}**, B,** and **x** have the same significance as previously) with 1 to 4 moles of a polyamine **H**_{**2**}**N(C**_{**2**}**H**_{**4**}**NH)**_{**q**}**H** where **q** has the same significance as previously, the compound obtained having been reacted with 1 to 4q moles of an alkaline metal mono halogen acetate over a temperature range of between 45 and 90°C.

3. Process to obtain perfluoroalkyl products in accordance with the claim (1) and which corresponds to the general formula **R**_{**F**}**-(CH**_{**2**}**)**_{**x**}**-B-T-E** where the parameters are the following:
**E = 2,3 epoxypropyl**
**T = -[N(A-OH)CH**_{**2**}**CHOHCH**_{**2**}**)**_{**m-1**}**-N(A-OH)-** or
**-[N(A-NHR**_{**2**}**)CH**_{**2**}**CHOHCH**_{**2**}**)**_{**m-1**}**-N(A-NHR**_{**2**}**)-** or
**-(NR**_{**2**}**-A-NR**_{**2**}**-CH**_{**2**}**CHOHCH**_{**2**}**)**_{**m-1**}**-NR**_{**2**}**-A-NR**_{**2**}**-**
**R**_{**F**}**, A, B, m, x** and **R** having the same significance as previously,
Over a temperature range of between 20 and 90°C, 1 mole of a perfluoroalkyl compound **(R**_{**F**}**-(CH**_{**2**}**)**_{**x**}**B-S** are reacted where **S** = **F** when **B** is not equal to a simple bond, **S** = **Cl** or **Br** when **x** > 0, **S** = **I** when **B** is a simple bond and where **R**_{**F**}**, B,** and **x** have the significance as previously) with 2 to 10 moles of a polyamine **H**_{**2**}**N(C**_{**2**}**H**_{**4**}**NH)**_{**q**}**H,** of an alkanolamine **H**_{**2**}**N-A-OH** or of a diamine.
**H**_{**2**}**N-C(U)HCH**_{**2**}**(OCH**_{**2**}**CHCH**_{**3**}**)**_{**a**}**-(OCH**_{**2**}**CH**_{**2**}**)**_{**b**}**-[OCH**_{**2**}**C(U)H]**_{**c**}**-NH**_{**2**}
**where q, A, U, a,**
**b** and **c** have the same significance as previously, the compound obtained having been reacted with 2 to 10 moles of glycerol epichlorhydrin over a temperature range of between 20 and 90°C, then with 4 to 12 moles of KOH over a temperature range of between 30 and 90°C, then 0 to 10q moles of an alkaline metal mono halogen acetate over a temperature range of between 60 and 90°C; the order in which the glycerol epichlorhydrin and the alkaline metal mono halogen acetate are added can be inversed.

4. Application of new perfluoroalkyl surface active agents, in accordance with claim (1), which are **characterised by** the fact that they can be used as alcophobic and oleophobic agents in the technique and mainly in extinguishing foam compositions able to extinguish not only hydrocarbon fires, but also polar liquid fires (alcohols, ethers, esters etc...).

5. Alcophobic perfluoroalkyl compound that corresponds to the following formula:
C₈F₁₇SO₂N (CH₂COOK)C₂H₄N(CH₂COOK)C₂H₄NHSO₂C₈F₁₇
Obtained by introducing into a reaction chamber with a mixer and a cooler, 1.03 g (0.01 mole) of diethylenetriamine (mix of isomers) and 4 g of dimethylformamide, then by pouring, cooling and mixing briskly 10 g (0.02 mole) of perfluorooctyl sulfonyl fluoride. This is mixed at 50°C for 30 minutes and then a further two hours at 80°C. 5 ml of water are then added while cooling down to 50°C and then a solution containing 2.33 g (0.02 moles) of sodium monochloracetate dissolved respectively in 10 ml of water is added. The temperature of the mix is kept at 70-80°C for 5 hours. Then, the mix is cooled to 30°C and 4 g of butyldiglycol then 5.6 g of 50% concentration potassium hydroxide is added, then water in sufficient quantity is added to obtain 100 g of concentrated solution with a pH of approximately 8.

6. Alcophobic perfluoroalkyl compound that corresponds to the following formula:
C₈F₁₇SO₂N (CH₂COOK)C₂H₄[N(CH₂COOK)C₂H₄)_{q}NHSO₂C₈F₁₇
with q =3.
